# FASCICULE DE BREVET EUROPEEN

(11) **EP 2 364 782 B1**
(45) Date de publication et mention de la délivrance du brevet: **06.05.2020**
(21) Numéro de dépôt: 11001919.7
(22) Date de dépôt: 08.03.2011
(51) Int. Cl.: B03B 9/06, B03B 5/18, C05F 9/00, C05F 17/00

(54) **Procédé et dispositif de traitement des produits lourds issus d'un tri de déchets**
Verfahren und Vorrichtung zur Behandlung der Schwerstoffe, welche von einer Abfallsortierung herrühren
Process and device for the treatment of the heavy products derived from waste sorting

(30) Priorité: 08.03.2010 FR 1000928
(43) Date de publication de la demande: 14.09.2011
(73) Titulaire: Vinci Environnement, 92500 Rueil Malmaison (FR)
(72) Inventeur: Thibaut, Romain, 78360 Montesson (FR); Vizioz, LoÏc, 75012 Paris (FR)
(74) Mandataire: Regimbeau

(56) Documents cités:
- EP-A2- 0 644 166
- WO-A1-94/15892
- CN-A- 101 402 087
- DE-A1- 19 803 140
- FR-A1- 2 689 790
- US-A- 4 861 462

## Description

### DOMAINE TECHNIQUE DE L'INVENTION

L'invention concerne un procédé de traitement des produits lourds issus d'un tri de déchets.

### ÉTAT DE LA TECHNIQUE

Dans les installations de traitement biologique, de compostage ou de méthanisation par exemple, il est connu de procéder à une étape d'affinage des produits issus dudit traitement biologique.

Par exemple, dans les installations de compostage, il est connu de procéder à un affinage des produits issus de l'opération de compostage afin de séparer le compost affiné et les produits lourds inertes dénommés refus lourds, tels que le verre et les cailloux.

Toutefois, les produits lourds ainsi obtenus présentent une fraction inerte mais aussi des teneurs résiduelles en matières organiques relativement importantes. Ainsi, les produits lourds présentent un caractère polluant.

Pour cette raison, les produits lourds issus de l'affinage du compost sont assimilés à des ordures ménagères.

Par conséquent, les produits lourds ne peuvent constituer une matière première inerte pouvant notamment être utilisée dans les travaux publics, pour la sous-couche routière ou pour les remblais, par exemple.

Par ailleurs, les produits lourds sont couramment destinés à être enfouis. Or, les conditions d'enfouissement des produits lourds présentant des teneurs résiduelles en matières organiques sont beaucoup plus strictes et coûteuses que les conditions d'enfouissement des déchets inertes.

Dans la pratique, en France par exemple, les produits lourds présentant de fortes teneurs en matière organique sont enfouis dans des centres d'enfouissement technique (CET) de classe 2, alors que les déchets inertes sont normalement expédiés vers les centres d'enfouissement de classe 3. Or, les conditions d'exploitation des centres d'enfouissement de classe 2 sont plus strictes et plus coûteuses que celles des centres de classe 3.

Afin de résoudre ce problème, il a été envisagé de séparer les fractions inertes grossières du compost par une opération de tamisage puis de décontaminer les fractions inertes grossières des produits lourds de leurs souillures organiques par un traitement hydraulique de lavage. Un tel procédé est notamment décrit dans la demande de brevet français FR 2 689 790. Un procédé selon le préambule de la revendication 1 est décrit dans la demande de brevet international WO 94/15892.

Toutefois, dans la pratique, avec ce procédé, il est très difficile d'obtenir à la sortie de l'opération de lavage des produits lourds présentant une faible teneur résiduelle en matière organique. Ainsi, ce procédé ne résout que partiellement les problèmes mentionnés ci-dessus.

### OBJET DE L'INVENTION

L'invention vise à remédier à ces problèmes en proposant un procédé d'extraction et un procédé de traitement des produits lourds permettant d'obtenir des produits lourds inertes présentant des teneurs résiduelles en matières organiques très faibles.

À cet effet, l'invention propose un procédé de traitement des produits lourds issus d'un affinage de déchets provenant d'un traitement biologique comportant :
- une étape de criblage des produits lourds afin de séparer une fraction de taille supérieure et une fraction de taille inférieure ; et
- une étape de concentration gravimétrique dans l'eau de la fraction de taille supérieure afin de séparer des particules inertes plus denses des particules organiques moins denses,
- caractérisé en ce qu'un test de lixivation est réalisé sur un échantillon des particules inertes.

Le procédé selon l'invention permet ainsi d'obtenir des produits inertes présentant des teneurs résiduelles en matières organiques très faibles, notamment inférieures à 3 %. En effet, d'une part, l'opération de concentration gravimétrique en phase aqueuse permet de séparer de manière efficace les particules inertes des particules organiques. En outre, d'autre part, l'on a découvert que cette opération est encore plus efficace et permet d'obtenir de meilleurs rendements de séparation si l'on effectue, préalablement à cette opération, un criblage permettant de limiter la gamme de tailles des particules à classifier. En effet, la séparation gravimétrique est en réalité également affectée par le volume et la forme des particules.

Dans un mode de réalisation, l'on procède à une étape d'attrition de la fraction de taille supérieure provenant de l'étape de criblage avant d'effectuer l'étape de concentration gravimétrique. Cette étape permet de diminuer davantage la teneur de matière organique dans les produits lourds inertes.

Avantageusement, l'étape de criblage est réalisée au travers d'une maille présentant un diamètre compris entre 2 et 5 mm. En effet, les mailles de cette taille permettent d'obtenir un excellent compromis entre la quantité de produits passants qui seront mis en refus et l'efficacité de l'opération de classification densimétrique qui sera réalisée sur les produits de diamètres plus importants.

Avantageusement, l'étape de criblage est réalisée au moyen d'un crible à toiles à effet trampoline permettant de limiter les colmatages des mailles dus aux fines.

Avantageusement, l'on procède à l'égouttage des particules inertes plus denses provenant de l'étape de concentration gravimétrique.

L'étape de concentration gravimétrique est de préférence réalisée au moyen d'un jig.

Avantageusement, le procédé comporte une étape d'analyse des particules inertes. Pour ce faire, l'on peut notamment prélever des particules inertes et pratiquer en laboratoire un test de lixiviation pour déterminer si les particules inertes comportent une proportion de carbone organique totale (COT) inférieure à 500 mg/kg de matière sèche et une proportion de fraction soluble (FS) inférieure à 4000 mg/kg de matière sèche.

Selon ce procédé de l'invention, la phase de lavage avec l'étape de concentration gravimétrique est effectuée après les traitements biologiques de méthanisation et de maturation des déchets affinés contenant les refus lourds.

Un procédé d'extraction des produits lourds à partir d'un tri de déchets destinés à subir un traitement biologique et comprenant au moins une étape de criblage et une phase de lavage desdits produits, qui ne fait pas partie de l'invention, comprend :
- une première étape de criblage entre 0 et 30 mm suivie d'une opération affinage permettant l'extraction d'une première fraction de refus lourds puis, pour la faction passante,
- une seconde étape de criblage entre 0 et 10 mm suivie d'une seconde opération d'affinage complémentaire permettant l'extraction d'une seconde fraction de refus lourds ;
- lesdites première et seconde fractions de refus lourds étant ensuite directement acheminées vers la phase de lavage sans traitement de méthanisation ou de maturation préalable.

Selon une variante, préalablement à la première étape de criblage, les déchets subissent des opérations de fractionnement et de fermentation partielle dans un bio-réacteur.

De préférence, la faction organique résultant de la phase de lavage des refus lourds est recyclée dans le bio-réacteur.

Un dispositif pour la mise en œuvre d'un procédé de traitement selon l'invention, comportant :
- des moyens de criblage des produits lourds afin de les séparer en une fraction de taille supérieure et une fraction de taille inférieure ; et
- des moyens de concentration gravimétrique dans l'eau de la fraction de taille supérieure afin de séparer des particules inertes plus denses des particules organiques moins denses.

Avantageusement, les moyens de criblage comportent un crible à toiles avec effet de trampoline et/ou des tables à rebonds et les moyens de concentration gravimétrique comprennent un jig. De préférence, le dispositif comporte une table d'égouttage.

### BRÈVE DESCRIPTION DES FIGURES

D'autres objets et avantages de l'invention apparaîtront au cours de la description qui suit, faite en référence aux dessins annexés, dans lesquels :
- la figure 1 est un schéma général d'une installation de traitement des déchets;
- la figure 2 est un diagramme illustrant les différentes étapes d'un procédé d'affinage de compost suivi d'un procédé de traitement des produits lourds issus de cet affinage;
- la figure 3 est un schéma illustrant un mode de réalisation du dispositif de traitement des refus lourds; et
- la figure 4 est un schéma général illustrant une installation de traitement de déchets.

### EXEMPLES DE RÉALISATION

De manière générale, l'invention s'applique de la même façon aux produits ou refus lourds issus d'un affinage de tous déchets provenant d'un traitement biologique, complet (procédé de méthanisation, maturation, ...) ou partiel (en bio-réacteur BRS...).

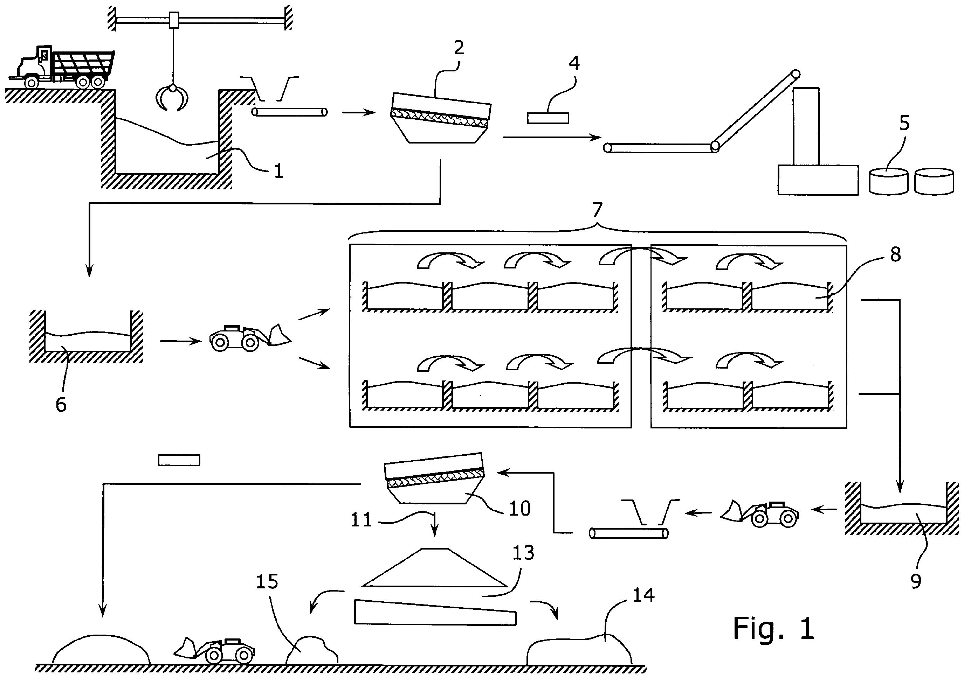

Dans un procédé de compostage, tel que schématisé sur la figure 1, les déchets provenant d'une consommation domestique, d'une activité industrielle, agricole ou commerciale sont, dans un premier temps, réceptionnés dans une fosse ou trémie 1. Par la suite les déchets sont triés et extraits avant de subir une opération initiale de criblage 2 au travers de mailles présentant un diamètre compris entre 110 mm à 350 mm. Les déchets retenus lors du criblage sont dé-ferraillés 4 puis mis en balles 5, lesdites balles 5 étant destinées à servir de combustible. Les déchets passant au travers des mailles sont quant à eux stockés dans des fosses tampons 6 avant d'être envoyés vers une autre installation de traitement biologique ou mécanique.

Selon une première variante, il est prévu que les déchets triés et criblés soient ensuite acheminés vers une installation de compostage 7 représentée sur la figure 1 et comprenant plusieurs fosses 8 ou tunnels de compostage dans lesquels les déchets seront décomposés par une fermentation accélérée et contrôlée de la matière organique. De manière régulière et, de préférence, hebdomadaire, les déchets seront retournés et transportés vers une fosse adjacente, ou un silo 8 de stockage.

De manière avantageuse, l'installation de compostage comprend un dispositif de désodorisation des effluents gazeux viciés issus du traitement biologique de compostage, non représenté. Le dispositif de désodorisation comprend un ou plusieurs bio filtres transformant par voie biologique les composants toxiques ou malodorants en composants neutres et non dangereux. Typiquement, un bio filtre comprend une zone d'humidification suivie d'une zone de filtration. La zone d'humidification permet de nettoyer l'effluent gazeux vicié et de le saturer en eau. Dans la zone de filtration, l'effluent gazeux traverse lentement le matériau filtrant et les composants malodorants se fixent sur le film d'eau qui recouvre le matériau filtrant. Par la suite, les micro-organismes, qui se développent dans le matériau filtrant, transforment les composants malodorants en composants neutres et non dangereux. Les effluents liquides ou purges provenant des bio filtres sont récupérés et conduits dans un canal d'évacuation des purges et pourront être utilisés dans le cadre du procédé de traitement des produits lourds, comme il sera expliqué par la suite.

À l'issue de l'opération de compostage, les produits obtenus sont stockés, dans une fosse 9, avant d'être affinés.

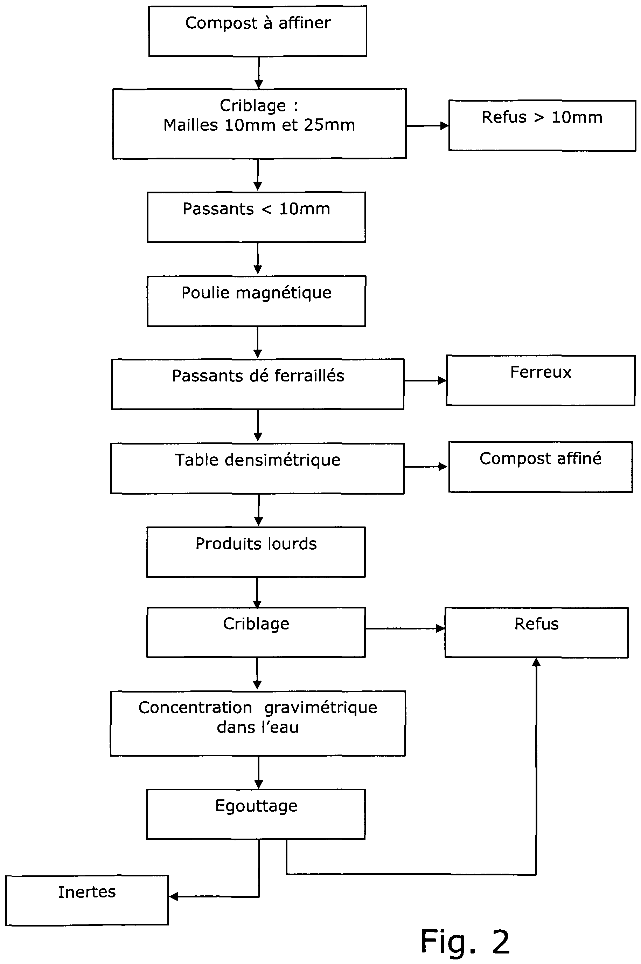

Les opérations d'affinage du compost sont détaillées sur la figure 2.

Dans un premier temps, le compost à affiner subit une ou plusieurs opérations 10 de criblage. Les mailles de criblage présentent un diamètre de l'ordre de 10 mm par exemple. Les produits non retenus, appelés passants 11, sont dé ferraillées au moyen d'une poulie magnétique 12.

Par la suite, les passants déferraillés subissent un tri densimétrique 13. Le tri densimétrique 13 permet de séparer les corps de dimensions similaires mais de poids spécifiques différents. Ainsi, ce tri permet de séparer efficacement les refus lourds de la matière organique formant le compost.

Le tri densimétrique 13 est par exemple réalisé au moyen d'une table densimétrique, représentée sur la figure 1. La table densimétrique comporte des moyens de ventilation créant un courant d'air ascendant formant un lit fluidisé et une grille vibrante. Le mélange à traiter est amené sur la grille vibrante et se met en fluidisation, les éléments légers entrent en suspension et se déplacent vers une première sortie alors que les éléments lourds restent en contact avec la table vibrante et se déplacent vers une second sortie. Le tri densimétrique permet donc d'obtenir d'une part un compost affiné 14 et d'autre part des refus lourds 15 dont les dimensions sont inférieures à 10 mm. Cette méthode est particulièrement efficace et permet de réduire l'hétérogénéité des produits lourds.

De manière alternative, le tri-densimétrique des passants déferraillés peut être réalisé par d'autres technologies de séparation, tels que les tables à rebond ou autres technologies de séparation par vibration.

À titre d'exemple, les refus lourds 15 de compost, à la sortie de la table densimétrique 13, présentent un taux d'environ 75 % (+/- 10 %) de matière sèche, dont la composition est la suivante :
- 85 % (+/- 5%) de produits inertes ; et
- 15 % (+/- 5%) de matière organique non synthétique.

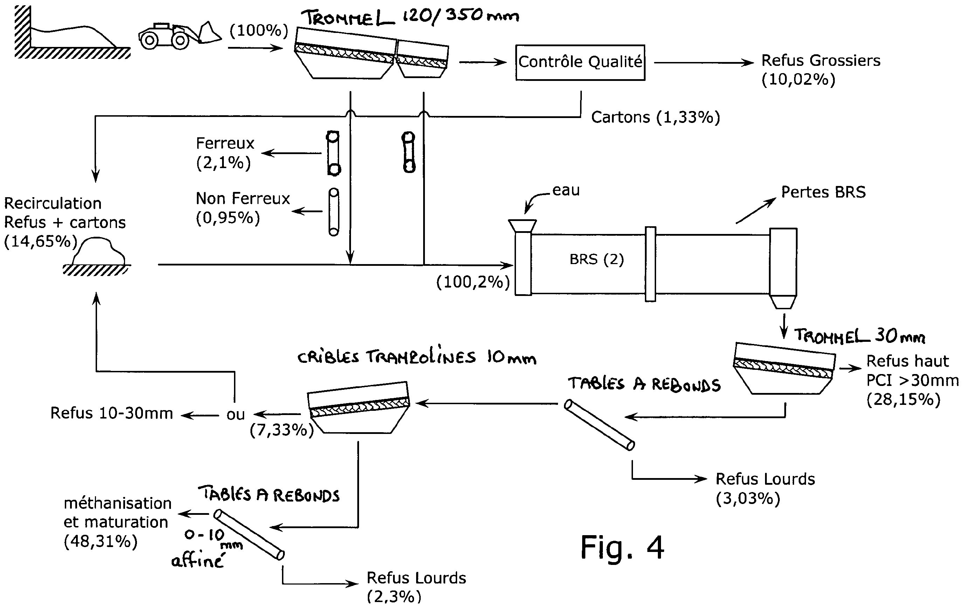

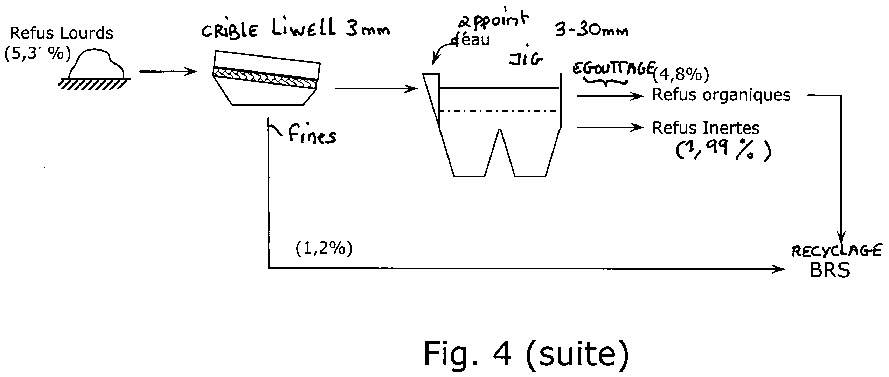

Selon une seconde variante, l'installation de traitement comprend une filière de tri représentée sur la figure 4, avec une étape de criblage primaire qui est sensiblement conforme à l'opération de criblage 2 illustrée sur la figure 1.

Toutefois, la filière de tri comprend, en fonction du tonnage de déchets, au moins un bio-réacteur (Bio Réacteur Satbilisateur - BRS) et, dans le mode de réalisation représenté, deux bio-réacteurs en parallèle, disposés de façon intercalaire entre le crible primaire et une série de cribles secondaires.

Comme décrit dans le brevet EP 1 640 445, ce bio-réacteur de fermentation préalable comporte principalement un tambour cylindrique horizontal rotatif dans lequel séjournent les déchets pendant environ 3 jours. Ce réacteur produit deux effets sur les déchets :
▪ un effet biologique : la paroi interne du cylindre rotatif se recouvre lors de sa mise en service d'une couche homogène de compost fin et tassé dans laquelle se développent des micro-organismes. Ceux-ci ensemencent les déchets entrants et permettent d'initier le mécanisme de fermentation qui se poursuivra ultérieurement. Cette étape de fermentation partielle prépare les déchets et notamment les papiers/cartons par décomposition sommaire et fragmentation en vue de leur fermentation ultérieure plus poussée ;
▪ un effet mécanique : la rotation permanente du réacteur, réalise par friction des particules entre elles et notamment par attrition sur les corps durs (verre, ferrailles, etc...), la dilacération sélective des déchets. Les plus fragiles, les fermentescibles et papier/cartons, sont fractionnés et réduits tandis que les non-compostables et les inertes, restent pratiquement intacts.

Le tambour tourne à 1 tour/minute et comporte des couteaux sur toute la longueur du tube cylindrique. Ceux-ci accélèrent la dilacération lente des papier-cartons et favorisent leur avancement (effet similaire à des releveurs).

Afin d'accélérer la dégradation et l'attrition de la fraction organique, notamment des papiers/cartons, une humidification en tête de cylindre sera réalisée par injection d'eau.

L'eau d'humidification proviendra prioritairement des excédents d'effluents du procédé. En effet, ces liquides apportent non seulement l'eau nécessaire à l'humidification du produit mais également des minéraux nutritifs (N, P et K) qui amélioreront la qualité agronomique du produit final.

De plus, une oxygénation du déchet est réalisée par aération forcée des cylindres (aspiration d'air à l'entrée des cylindres). L'air neuf rentre à l'extrémité du tube, soit par l'ouverture de la trappe de déchargement, soit par un système de clapets positionnés sur le bouclier de sortie lorsque le réacteur n'est pas en phase de déchargement. Cette disposition de l'aération permet un balayage de l'air chaud (en extrémité de tube) vers les zones plus froides.

L'air d'oxygénation émis est capté par un ventilateur de reprise et envoyé sur l'unité de désodorisation.

Les systèmes d'aération et d'humidification proposés permettent une gestion efficace et quantifiable de la dégradation au sein du réacteur de pré-fermentation.

L'entrée et la sortie du réacteur seront implantées à l'intérieur du bâtiment pour confiner les odeurs.

En sortie de réacteur, sont prévus deux étages de criblage à 30 mm puis 10 mm.

L'objectif de ce post traitement en aval est de séparer le flux de déchets en trois fractions :
▪ la fraction 0-10 mm, la plus riche en « MONS » (Matière Organique Non Synthétique), destinée à être méthanisée puis à produire du compost ;
▪ la fraction 10-30 mm, comportant une part non négligeable de « MONS ». Cette fraction est renvoyée pour partie vers le hall de stockage, puis recyclée dans le bio-réacteur. La recirculation de la fraction 10-30 mm vers le réacteur permet d'optimiser la récupération de la « MONS » et de réduire la fraction résiduelle de déchets envoyée en centres d'enfouissement technique (CET) de classe II.

Une purge périodique doit être effectuée de manière à éviter une accumulation de cette fraction, et à éviter le fractionnement des déchets plastiques (augmentation de la teneur en matières plastiques du compost).

La fraction 10-30 mm renvoyée vers le hall de stockage ne passe pas par le crible primaire et est envoyée directement vers le bio-réacteur par une trémie de rechargement spécifique.

Cette trémie a en outre d'autres avantages, car elle permet :
▪ d'envoyer les cartons récupérés au niveau de la cabine vers le réacteur et,
▪ en cas d'arrêt de la ligne de criblage primaire de by-passer, cette ligne pour aller directement vers le réacteur.
▪ la fraction > 30 mm, pauvre en « MONS » et comportant une proportion importante de plastiques, est envoyée en refus haut « PCI » (Pouvoir Calorifique Inférieur).

Le premier criblage aval est réalisé par un trommel à mailles de 30 mm. Les mailles de 30 mm permettent de sélectionner la fraction la plus riche en matière organique. La fraction supérieure à 30 mm est directement envoyée en refus haut « PCI ».

Les passants entre 0 et 30 mm sont ensuite criblés à 10 mm.

Après la pré-fermentation dans le bio-réacteur, la matière organique est relativement humide. Par conséquent, un criblage à 10 mm ne peut être envisagé qu'en utilisant un crible à effet trampoline pour éviter le colmatage des mailles. En effet, le phénomène de tension et de relâchement des toiles provoque la déformation des mailles, ce qui rend impossible leur obstruction.

Les cribles trampolines seront équipés d'une captation spécifique nécessaire à la préservation de leur durée de vie. En effet, les déchets pré-fermentés contiennent un taux notable d'ammoniac. Or ce composé est un acide faible en mélange dans l'eau qui attaque le matériau des tamis des cribles à effet trampoline.

Outre la captation des odeurs et des poussières produites par l'agitation de la matière dans le crible, la captation d'air permet d'évacuer l'humidité ambiante (évaporation de l'eau présente dans le pré-compost) pour éviter sa condensation dans l'équipement. Il est ainsi possible de protéger les tamis des attaques acides et de préserver le fonctionnement de l'équipement.

L'extraction des refus lourds indésirables (verre, cailloux, ...) contenus dans la fraction des fines inférieures à 10 mm est assurée par des tables à effet rebond-adhérence.
▪ Deux tables à rebonds sont placées en aval du trommel de 30 mm. Elles permettent un pré-affinage du produit en séparant les éléments les plus grossiers et protègent les trampolines en aval, les refus lourds extraits présentent, selon cette seconde variante, des dimensions comprises entre 3 et 30 mm.
▪ Deux autres tables à rebonds sont placées en aval des deux cribles à effet trampoline de 10 mm. Elles permettent d'atteindre une qualité de compost respectant le critère « d'inertage » de la norme NFU 44-051.

Les refus lourds rebondissent sur la tôle inclinée de la table puis sur un transporteur incliné à bande rigide avant d'être évacués vers le bas.

Les autres produits (organiques, fermentescibles, papiers/cartons,...), de par leur texture, glissent le long de la tôle inclinée, puis, adhérant au transporteur incliné, sont évacués vers le haut.

La table à rebonds présente plusieurs options de réglages et notamment :
- l'inclinaison de la tôle de rebond et son déplacement latéral pour ajustement vis-à-vis de la hauteur de chute et du point d'impact sur le transporteur de récupération, et
- l'inclinaison et la vitesse de rotation du transporteur de récupération.

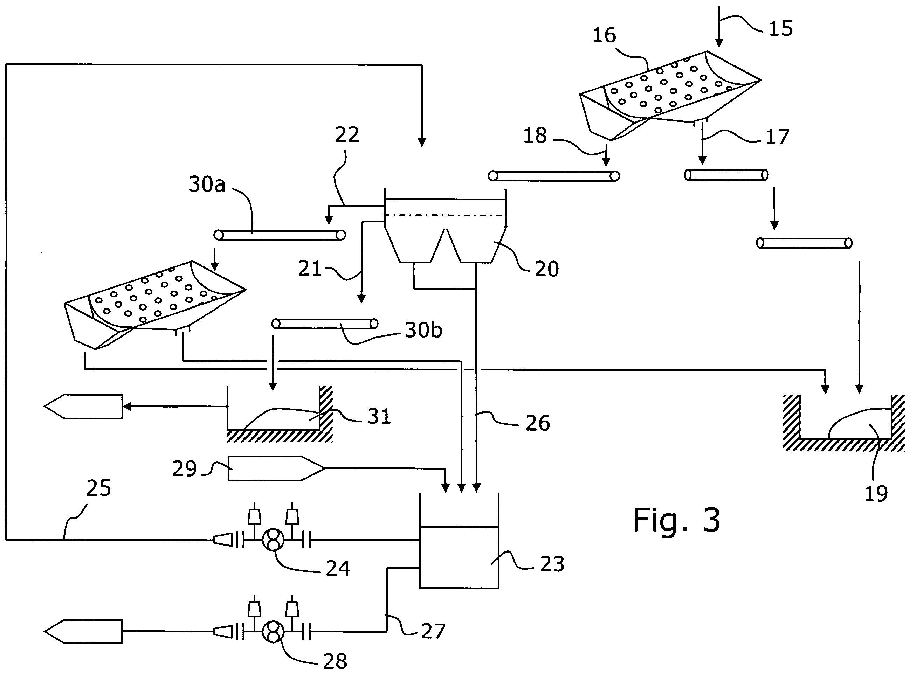

Quelque soit la variante de mise en œuvre adoptée pour les opérations de tri, les refus lourds extraits présentent encore une proportion de matière organique trop importante pour constituer une matière première inerte utilisable dans les travaux publics ou pouvant être enfouie à faible coût. Par conséquent, afin de résoudre ces problèmes, l'invention propose une opération et un dispositif de lavage de ces refus lourds, illustrés sur les figures 2 et 3.

Selon la première variante du procédé, l'opération de lavage est effectuée après méthanisation, maturation et/ou compostage des déchets comprenant encore une fraction de refus lourds alors que, selon la seconde variante du procédé, l'opération de lavage est effectuée après le tri et en parallèle de la méthanisation et de la maturation de la fraction fermentescible des déchets.

Dans un premier temps, les refus lourds 15 subissent une opération de criblage 16. Lors de cette opération, les refus lourds passent au travers d'une maille dont le diamètre est compris entre 2 et 5 millimètres et de préférence de 3 mm. Cette étape permet de séparer les refus lourds 15 en une fraction de taille supérieure 18 et une fraction de taille inférieure 17. La fraction de taille inférieure 17 au diamètre de la maille qui est composée d'une grande proportion de fines organiques et d'une faible proportion de fines minérales, est soit conduite vers un casier de refus 19, soit recyclée dans le bio-réacteur alors que la fraction de taille supérieure 18 est conduite vers des moyens de concentration gravimétrique 20. Cette opération de criblage permet de concentrer les refus lourds.

Selon un mode de réalisation avantageux, l'opération de criblage est réalisée au moyen d'un crible 16 à toiles à effet trampoline. Ces types de cribles 16 sont équipés de toiles élastiques en polyuréthane haute résistance qui sont alternativement tendues et détendues en fonctionnement. Ainsi, les particules se décollent des toiles et les mailles se déforment légèrement ce qui évite que des particules colmatent les mailles. Ce type de crible permet en outre de décoller les fines organiques des refus lourds.

Par la suite, la fraction de taille supérieure 18 issue du criblage 16 subit une opération de concentration gravimétrique 20 dans l'eau, également appelée concentration densimétrique. La concentration gravimétrique exploite la différence de masse volumique entre les inertes et la matière organique pour accomplir la séparation grâce à l'action combinée de la gravité et de différentes forces. Sous l'action de la gravité et d'une autre force, les particules baignant dans l'eau entrent en mouvement les unes par rapport aux autres afin de créer deux couches distinctes : la couche rassemblant les particules de faibles masse volumique : les particules organiques 22, et la couche rassemblant les particules de masse volumique plus élevée : les particules inertes 21.

Cette opération de concentration gravimétrique est réalisée dans l'eau qui, grâce à sa masse volumique plus élevée que l'air permet d'effectuer une meilleure séparation. La réalisation de cette opération dans un courant d'eau permet en outre de détacher les particules fines de matière organique des produits inertes.

Cette étape de concentration gravimétrique est de préférence réalisée au moyen d'un jig 20. Le principe de fonctionnement des jigs repose sur l'action de courants d'eau successivement ascendants et descendants qui circulent à travers un lit de particules. Sous l'effet des ces courants, les particules se stratifient en fonction de leur densité. La couche inférieure est constituée des particules lourdes : les particules inertes 21 et la couche supérieure est constituée des particules moins denses : les particules de matière organique 22. Enfin, les particules fines sont entraînées par les courants d'eau.

Dans un mode de réalisation particulier, le jig 20 comporte un châssis et un caisson de décantation monté oscillant sur le châssis afin de provoquer une pulsation verticale permettant la classification des particules par densité. Le caisson de décantation est par exemple entraîné par un système arbre excentrique et bielles dont la course et la fréquence d'entraînement sont, de préférence, réglées pour mouvoir le caisson selon des oscillations harmoniques. Le caisson de décantation est équipé d'une grille laissant passer les fines et l'eau. Cette grille est légèrement inclinée afin d'assurer le mouvement des particules entre l'entrée et la sortie du caisson de décantation. En sortie du caisson de décantation, les particules organiques 22 moins denses sont évacuées latéralement par une goulotte placée, en portion supérieure de la stratification de particules, perpendiculaire au flux. Quant aux particules inertes 21 plus lourdes, elles sont évacuées par un déversoir positionné en partie basse de la sortie du caisson de décantation.

La hauteur de la goulotte d'évacuation des produits lourds est réglée en fonction de la coupure que l'on souhaite obtenir. À titre d'information, la densité des particules minérales est généralement comprise entre 2,1 et 2, 7 g/cm³ alors que la densité des particules organiques est comprise aux alentours de 1,8 g/cm³. Aussi, on règle les paramètres susmentionnés du jig de sorte à effectuer une coupure aux alentours de 2 g/cm³. La fréquence et l'amplitude pulsatoire du caisson sont également réglées en fonction de la forme et de la granulométrie des particules à classifier.

Le jig 20 est approvisionné en eau par un circuit d'approvisionnement, en boucle fermée, comportant un réservoir 23, une pompe 24 de mise en circulation, un conduit d'amenée 25 pour conduire le liquide du réservoir 23 vers le jig 20 et un conduit d'évacuation 26 pour conduire le liquide du jig 20 vers le réservoir 23. L'installation comporte un conduit de purge 27 équipé d'une pompe 28 permettant de vider le réservoir 23 du liquide chargé en matière organique et en ultra-fines minérales et de le conduire vers un bassin de stockage. Le réservoir 23 est par ailleurs connecté à une alimentation 29 en liquide permettant de remplir le réservoir 23. Le débit de circulation d'eau au travers du jig est typiquement de l'ordre de 10 à 40 m³/heure par tonne de particules classifiées.

Selon un mode de réalisation particulier, l'installation comporte également des moyens de mesure de la quantité de matières fines dans l'eau, connectés à des moyens de commande de l'approvisionnement et de la purge du réservoir 23, de sorte à maintenir la quantité de matière fine dans l'eau en dessous d'un seuil. Ces moyens de mesure sont par exemple des détecteurs de niveaux ou de poids pour les sédiments plus lourds que l'eau (détection de voile de boues, capteurs à ultrasons), et des turbidimètres (par faisceaux lumineux) pour les matières en suspension dans l'eau.

Selon un mode de réalisation particulier de l'invention, le liquide 29 alimentant le réservoir 23 provient au moins en partie des purges des bio filtres. Pour ce faire, le canal d'évacuation des purges du dispositif de désodorisation est raccordé à l'alimentation 29. Le raccordement des purges du dispositif de désodorisation au circuit d'approvisionnement des moyens de classification gravimétrique permet de limiter la consommation d'eau de l'installation. On pourra également prévoir que le pH des purges des bio filtres soit ajusté avant leur admission dans le circuit d'approvisionnement en eau du jig 20, de sorte à augmenter la capacité de l'eau à décoller les particules organiques des particules inertes.

Dans un mode de réalisation, le liquide chargé de matière organique évacué du réservoir 23 subit un post traitement permettant de récupérer la matière organique. Cette matière organique peut notamment être incorporée au compost affiné. Pour ce faire, l'étape de post traitement comporte une opération de filtration, par décantation par exemple. Le liquide chargé de matière organique peut également être recyclé vers des réacteurs de méthanisation des déchets afin d'humidifier les déchets et/ou être recyclé pour l'arrosage des andains lors de l'opération de compostage. Avantageusement, on pourra prévoir que les effluents subissent une filtration des fines particules. En effet, dans les installations de compostage, les andains sont arrosés au moyen de buses permettant de diffuser l'eau sous forme de fines gouttelettes. Ainsi, il convient d'éliminer les fines particules des effluents susceptibles de colmater les orifices d'injection des buses.

Par la suite, en sortie des moyens de classification densimétrique, les particules organiques 22 moins denses sont conduites vers une table d'égouttage 30a puis conduites vers le casier de refus 19 ou recyclées dans le circuit de traitement de la matière organique (compostage, méthanisation ou maturation selon le schéma). Les particules inertes 21 sont également conduites vers une table d'égouttage 30b afin d'être emmenées vers une zone de stockage 31.

La table d'égouttage est par exemple un crible égoutteur. Un crible égoutteur se compose d'un caisson reposant sur un système de ressorts, comportant un ou deux étages et entraînés par deux moteurs balourdés produisant des vibrations. Les vibrations permettent d'assurer le transport des particules et d'assurer la séparation liquide/solide.

Dans un mode de réalisation, une seule table d'égouttage comportant deux voies en parallèle permet d'égoutter d'une part les particules organiques 22 et d'autre part les particules inertes 21.

On note que l'opération de concentration gravimétrique est d'autant plus efficace que la taille des particules se situe à l'intérieur d'une gamme restreinte. Ainsi, la combinaison d'une étape de criblage et d'une étape de concentration gravimétrique permet d'obtenir de très bon rendement de séparation des particules organiques 22 des particules inertes 21.

Typiquement, le procédé selon l'invention permet d'obtenir des produits lourds inertes qui comprennent moins de 30 g de matière organique par kg de déchets sec, soit moins de 3 %.

Dans certains cas, afin d'obtenir un tel résultat, il peut s'avérer nécessaire d'ajouter une étape d'attrition entre les étapes de criblage et de concentration gravimétrique. Cette opération vise à détacher les particules fines de matière organique qui adhère aux particules inertes et à nettoyer les particules de matières organiques par friction des particules les unes contre les autres. Cette opération est réalisée dans une cellule d'attrition, non représentée, comportant une enceinte et des moyens de brassage des particules à l'intérieur de l'enceinte, tels qu'une hélice entraînée en rotation.

Un test de lixiviation est réalisé sur un échantillon de produits lourds 21. Ce test permet de vérifier que les produits lourds secs comportent moins de 3 % de matière organique. Pour ce faire, lors du test de lixiviation, on prélève un échantillon de produits lourds 21 puis l'on vérifie que cet échantillon comporte une proportion de carbone organique totale (COT) inférieure à 500 mg/kg de matière sèche et une proportion de fraction soluble (FS) inférieure à 4000 mg/kg de matière sèche.

Si l'échantillon ne satisfait pas aux critères mentionnés ci-dessus, les produits lourds sont réinjectés en amont de l'étape de concentration gravimétrique. En outre, on peut prévoir d'ajuster les paramètres de criblage et/ou de concentration gravimétrique en fonction des résultats du test de lixiviation. On pourra par exemple ajuster les temps d'opération, le débit d'introduction du liquide durant l'étape de concentration gravimétrique ou son pH afin d'augmenter l'efficacité du lavage.

L'impact de l'étape de lavage des refus lourds sur le procédé de traitement des déchets se manifeste par :
- une optimisation du bilan matière ;
- une augmentation de la quantité extraite de refus lourds dans la plage de dimensions comprises entre 0 et 10 mm ; et
- un meilleur inertage des refus lourds.

Plus globalement, sur le volume total à traiter de refus lourds extraits en phase de tri amont, une fraction de 30% en poids correspond à la plage de 0-10 mm affiné, une fraction de 40% en poids est constituée de refus inertes et le reliquat (30% en poids) est recyclé dans le bio-réacteur.

La quantité de refus classe 2 à enfouir n'est plus que du tiers de celle qui est extraite par les procédés antérieurs.

L'invention est décrite dans ce qui précède à titre d'exemple. Il est entendu que l'homme du métier est à même de réaliser différentes variantes de réalisation de l'invention sans pour autant sortir du cadre de l'invention selon les revendications suivantes.

## Revendications

1. Procédé de traitement des produits lourds (15) issus d'un affinage de déchets provenant d'un traitement biologique comportant :
- une étape de criblage (16) des produits lourds afin de séparer une fraction de taille supérieure (18) et une fraction de taille inférieure (17); et
- une étape de concentration gravimétrique (20) dans l'eau de la fraction de taille supérieure (18) afin de séparer des particules inertes (21) plus denses des particules organiques (22) moins denses,
**caractérisé en ce qu'**un test de lixivation est réalisé sur un échantillon des particules inertes (21).

2. Procédé selon la revendication 1, **caractérisé en ce que** l'on procède à une étape d'attrition de la fraction de taille supérieure (18) provenant de l'étape de criblage (16) avant d'effectuer l'étape de concentration gravimétrique (20).

3. Procédé selon la revendication 1 ou la revendication 2, **caractérisé en ce que** l'étape de criblage (16) est réalisée au travers d'une maille présentant un diamètre compris entre 2 et 5 mm.

4. Procédé selon l'une quelconque des revendications 1 à 3, **caractérisé en ce que** l'étape de criblage (16) est réalisée au moyen d'un crible à toiles à effet trampoline.

5. Procédé selon l'une quelconque des revendications 1 à 4, **caractérisé en ce que** l'on procède à l'égouttage (30b) des particules inertes (21) provenant de l'étape de concentration gravimétrique.

6. Procédé selon l'une quelconque des revendications 1 à 5, **caractérisé en ce que** l'étape de concentration gravimétrique est réalisée au moyen d'un jig (20).

7. Procédé selon l'une des revendications 1 à 6, **caractérisé en ce qu'**il comporte une étape d'analyse des particules inertes (21).

8. Procédé selon la revendication 7, **caractérisé en ce que** l'on pratique un test de lixiviation pour déterminer si les particules inertes (21) comportent une proportion de carbone organique totale (COT) inférieure à 500 mg/kg de matière sèche et une proportion de fraction soluble (FS) inférieure à 4000 mg/kg de matière sèche.

9. Procédé selon l'une des revendications précédentes, **caractérisé en ce que** l'étape de concentration gravimétrique est effectuée après traitement biologique de méthanisation et de maturation des déchets affinés contenant les refus lourds.

## Patentansprüche

1. Verfahren zur Behandlung von Schwerstoffen (15), die aus einer Verfeinerung von Abfällen hervorgegangen sind, welche aus einer biologischen Behandlung stammen, umfassend:
- einen Aussiebschritt (16) der Schwerstoff, um eine Fraktion einer größeren Größe (18) und eine Fraktion einer kleineren Größe (17) zu trennen; und
- einen gravimetrischen Konzentrationsschritt (20) in dem Wasser der Fraktion einer größeren Größe (18), um dichtere inerte Partikel (21) von den weniger dichten organischen Partikeln (22) zu trennen,
**dadurch gekennzeichnet, dass** ein Auslaugtest an einer Probe der inerten Partikel (21) durchgeführt wird.

2. Verfahren gemäß Anspruch 1, **dadurch gekennzeichnet, dass** in einem Abriebschritt der Fraktion einer größeren Größe (18), die aus dem Aussiebschritt (16) stammt, bevor der gravimetrische Konzentrationsschritt (20) durchgeführt wird.

3. Verfahren gemäß Anspruch 1 oder Anspruch 2, **dadurch gekennzeichnet, dass** der Aussiebschritt (16) mittels eines Gitters realisiert wird, das einen zwischen 2 und 5 mm inbegriffenen Durchmesser aufweist.

4. Verfahren gemäß irgendeinem der Ansprüche 1 bis 3, **dadurch gekennzeichnet, dass** der Aussiebschritt (16) mittels eines Leinensiebs mit Trampolineffekt realisiert wird.

5. Verfahren gemäß irgendeinem der Ansprüche 1 bis 4, **dadurch gekennzeichnet, dass** ein Abtropfen (30b) der inerten Partikel (21) vorgenommen wird, die aus dem gravimetrischen Konzentrationsschritt stammen.

6. Verfahren gemäß irgendeinem der Ansprüche 1 bis 5, **dadurch gekennzeichnet, dass** der gravimetrische Konzentrationsschritt mittels einer Setzmaschine (20) realisiert wird.

7. Verfahren gemäß irgendeinem der Ansprüche 1 bis 6, **dadurch gekennzeichnet, dass** es einen Analyseschritt der inerten Partikel (21) umfasst.

8. Verfahren gemäß Anspruch 7, **dadurch gekennzeichnet, dass** ein Auslaugtest praktiziert wird, um zu bestimmen, ob die inerten Partikel (21) einen Anteil an gesamtem organischen Kohlenstoff (COT) von weniger als 500 mg/kg Trockenmasse und einen Anteil einer löslichen Fraktion (FS) von weniger als 4000 mg/kg Trockenmasse umfassen.

9. Verfahren gemäß einem der voranstehenden Ansprüche, **dadurch gekennzeichnet, dass** der gravimetrische Konzentrationsschritt nach einer biologischen Methanisierungs- und Reifungsbehandlung der verfeinerten Abfälle durchgeführt wird, die den schweren Ausschuss enthalten.

## Claims

1. A method for treating heavy products (15) resulting from refining waste from a biological treatment including:
- a step of screening (16) the heavy products in other to separate a higher size fraction (18) and a lower size fraction (17); and
- a step of gravity concentrating (20) the higher size fraction (18) in water in order to separate denser inert particles (21) from less dense organic particles (22),
**characterised in that** a leaching test is carried out on a sample of the inert particles (21).

2. The method according to claim 1, **characterised in that** a step of attritioning the higher size fraction (18) from the screening step (16) is performed before carrying out the gravity concentration step (20).

3. The method according to claim 1 or claim 2, **characterised in that** the screening step (16) is performed through a mesh having a diameter between 2 and 5mm.

4. The method according to any of claims 1 to 3, **characterised in that** the screening step (16) is carried out by means of a trampoline-effect wire screen.

5. The method according to any of claims 1 to 4, **characterised in that** draining (30b) the inert particles (21) from the gravity concentration step is performed.

6. The method according to any of claims 1 to 5, **characterised in that** the gravity concentration step is carried out by means of a jig (20).

7. The method according to any of claims 1 to 6, **characterised in that** it includes a step of analysing the inert particles (21).

8. The method according to claim 7, **characterised in that** a leaching test is performed to determine whether the inert particles (21) include a total organic carbon (TOC) proportion lower than 500mg/kg solids and a soluble fraction (SF) proportion lower than 4000mg/kg solids.

9. The method according to one of the previous claims, **characterised in that** the gravity concentration step is carried out after a biological treatment of methanising and maturing the refined waste containing heavy refuse.
